# EUROPEAN PATENT APPLICATION

(11) **EP 2 444 516 A1**
(43) Date of publication of application: **25.04.2012**
(21) Application number: 11186596.0
(22) Date of filing: 25.10.2011
(51) Int. Cl.: C23C 4/12, C23C 28/00

(54) **Thermal spray coating process for compressor shafts**

(30) Priority: 25.10.2010 US 910994
(71) Applicant: United Technologies Corporation, Hartford, CT 06101 (US)
(72) Inventor: Zajchowski, Paul H., Enfield, CT 06082 (US); Blankenship, Donn R., Southbury, CT 06488 (US); Ostrout, Craig L., Ellington, CT 06029 (US)
(74) Representative: Tomlinson, Kerry John

(57) **Abstract**

A process for forming a dense abrading thermally insulating coating on a rotor shaft in a gas turbine engine is described. The process comprises fixturing (72) the rotor shaft to allow it to rotate about its axis and plasma spraying (74,76) the coating on the rotor shaft. The coating comprises a zirconia based ceramic top coat layer on a metallic bond coat.

## Description

### BACKGROUND

Gas turbine engines include compressor rotors including a plurality of rotating compressor blades. Minimizing the leakage of air, such as between tips of rotating blades and casing of the gas turbine engine increases the efficiency of the gas turbine engine as the leakage of air over the tips of the blades can cause aerodynamic efficiency losses. To minimize this, the gap at tips of the blades is set small and at certain conditions, the blade tips may rub against and engage an abradable seal on the casing of the gas turbine. The abradability of the seal material prevents damage to the blades while the seal material itself wears to generate an optimized mating surface and thus reduce the leakage of air.

Abradable seals have also been used in turbines to reduce the gap between a rotor and a vane. Thermally sprayed abradable seals on rotors have been used in gas turbine engines since the late 1960s. The seals have been made as coatings from composite materials that derive their abradability from the use of low shear strength materials or from a porous, friable coating.

Recent rotor designs have hard coatings running against vanes with tips coated with abradable material. Alumina coatings are thermally conductive that result in substrate heating during high heat rub events. Thermal expansion induced run away events can lead to rotor bum through and subsequent unscheduled engine removal.

A need exists for a simpler sealing system comprising a hard, abrasion resistant, thermally insulative rotor coating that can run against and abrade superalloy vane tips to maintain acceptable sealing gap dimensions.

### SUMMARY

A process for forming a dense abrading thermally insulating coating on a rotor shaft in a gas turbine engine is described. The process includes mounting the rotor shaft in a fixture such that it can be axially rotated. The process further includes cleaning the rotor surface to improve adhesion between the coating and the rotor substrate. The process further includes thermally spraying a metal bond coat on the rotor substrate while rotating the substrate. The process finally includes thermally spraying a zirconia based ceramic top coat on the bond coat while the substrate is rotating.

### BRIEF DESCRIPTION OF THE DRAWINGS

FIG. 1 illustrates a simplified cross-sectional view of a gas turbine engine.

FIG. 2 illustrates a simplified cross sectional view illustrating the relationship of the rotor and vanes taken along the line 2-2 of FIG. 1, not to scale.

FIG. 3 is a cross-sectional view taken along the line 3-3 of FIG. 2, not to scale.

FIG. 4 is a process for forming an abrasive coating.

### DETAILED DESCRIPTION

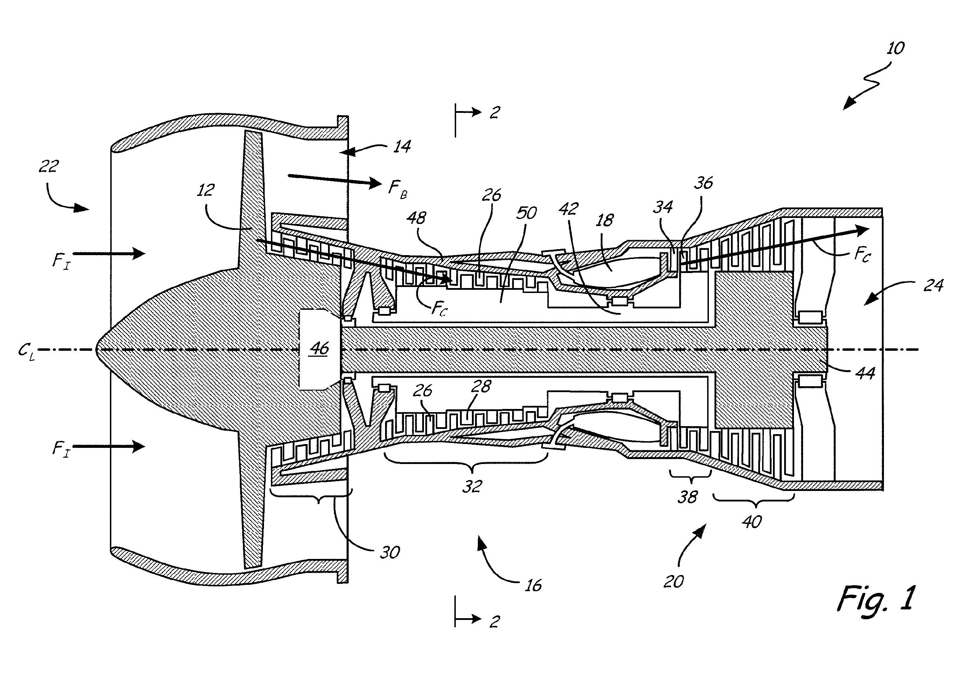

FIG. 1 is a cross-sectional view of gas turbine engine 10, in a turbofan embodiment. As shown in FIG. 1, turbine engine 10 comprises fan 12 positioned in bypass duct 14, with bypass duct 14 oriented about a turbine core comprising compressor (compressor section) 16, combustor (or combustors) 18 and turbine (turbine section) 20, arranged in flow series with upstream inlet 22 and downstream exhaust 24.

Compressor 16 comprises stages of compressor vanes 26 and blades 28 arranged in low pressure compressor (LPC) section 30 and high pressure compressor (LPC) section 32. Turbine 20 comprises stages of turbine vanes 34 and turbine blades 36 arranged in high pressure turbine (HPT) section 38 and low pressure turbine (LPT) section 40. HPT section 38 is coupled to HPC section 32 via HPT shaft 50, forming the high pressure spool or high spool. LPT section 40 is coupled to LPC section 30 and fan 12 via LPT shaft 44, forming the low pressure spool or low spool. HPT shaft 50 and LPT shaft 44 are typically coaxially mounted, with the high and low spools independently rotating about turbine axis (centerline) C_{L}.

Fan 12 comprises a number of fan airfoils circumferentially arranged around a fan disk or other rotating member, which is coupled (directly or indirectly) to LPC section 30 and driven by LPT shaft 44. In some embodiments, fan 12 is coupled to the fan spool via geared fan drive mechanism 46, providing independent fan speed control.

As shown in FIG. 1, fan 12 is forward-mounted and provides thrust by accelerating flow downstream through bypass duct 14, for example in a high-bypass configuration suitable for commercial and regional jet aircraft operations. Alternatively, fan 12 is an unducted fan or propeller assembly, in either a forward or aft-mounted configuration. In these various embodiments turbine engine 10 comprises any of a high-bypass turbofan, a low-bypass turbofan or a turboprop engine, and the number of spools and the shaft configurations may vary.

In operation of turbine engine 10, incoming airflow F₁ enters inlet 22 and divides into core flow F_{c} and bypass flow F_{B}, downstream of fan 12. Core flow F_{c} propagates along the core flowpath through compressor section 16, combustor 18 and turbine section 20, and bypass flow F_{B} propagates along the bypass flowpath through bypass duct 14.

LPC section 30 and HPC section 32 of compressor 16 are utilized to compress incoming air for combustor 18, where fuel is introduced, mixed with air and ignited to produce hot combustion gas. Depending on embodiment, fan 12 also provides some degree of compression (or pre-compression) to core flow F_{c}, and LPC section 30 may be omitted. Alternatively, an additional intermediate spool is included, for example in a three-spool turboprop or turbofan configuration.

Combustion gas exits combustor 18 and enters HPT section 38 of turbine 20, encountering turbine vanes 34 and turbine blades 36. Turbine vanes 34 turn and accelerate the flow, and turbine blades 36 generate lift for conversion to rotational energy via HPT shaft 50, driving HPC section 32 of compressor 16 via HPT shaft 50. Partially expanded combustion gas transitions from HPT section 38 to LPT section 40, driving LPC section 30 and fan 12 via LPT shaft 44. Exhaust flow exits LPT section 40 and turbine engine 10 via exhaust nozzle 24.

The thermodynamic efficiency of turbine engine 10 is tied to the overall pressure ratio, as defined between the delivery pressure at inlet 22 and the compressed air pressure ratio, as defined between the delivery pressure at inlet 22 and the compressed air pressure entering combustor 18 from compressor section 16. In general, a higher pressure ratio offers increased efficiency and improved performance, including greater specific thrust. High pressure ratios also result in increased peak gas path temperatures, higher core pressure and greater flow rates, increasing thermal and mechanical stress on engine components.

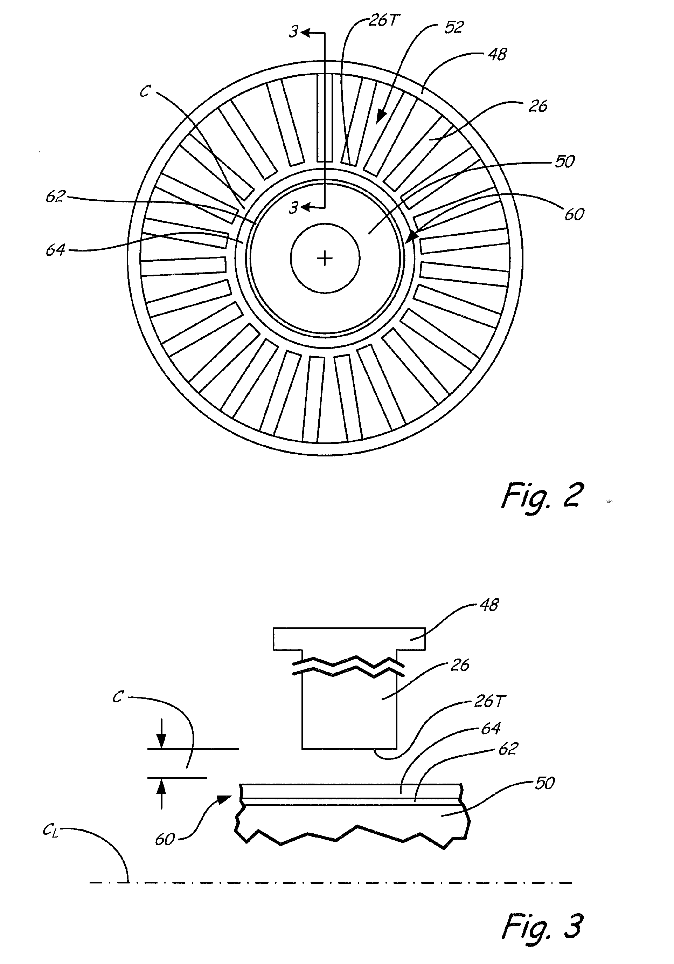

The present invention is intended to be used with rotor lands and stator vanes. FIG. 2 and FIG. 3 disclose the invention with respect to interaction of a stator vane with a rotor.

FIG. 2 is a cross section along the line 2-2 of Fig. 1 of a casing 48 which has a rotor shaft 50 inside. Vanes 26 are attached to casing 48 and the gas path 52 is shown as the space between vanes 26. Coating 60, corresponding to the coating of this invention, is on rotor 50 such that the clearance C between coating 60 and vane tips 26T of vanes 26 has the proper tolerance for operation of the engine, e.g., to serve as a seal to prevent leakage of air (thus reducing efficiency), while not interfering with relative movement of the vanes and rotor shaft. In FIGS. 2 and 3, clearance C is expanded for purposes of illustration. In practice, clearance C may be, for example, about 25 to 55 mils (635 to 1400 microns) when the engine is cold to 0 to 35 mils (889 microns) during engine operation depending on specific operations and previous rub events that may have occurred.

FIG. 3 shows the cross section along line 3-3 of FIG. 2, with casing 48 and vane 26. Coating 60 is attached to rotor 50, with a clearance C between coating 60 and vane tip 26T of vane 26 that varies with operating conditions, as described herein.

FIG. 2 and FIG. 3 show bi-layer coating 60 which includes metallic bond coat 62, and ceramic coating 64. Metallic bond coat 62 is applied to rotor 50. Ceramic coating 64 is deposited on top of bond coat 62 and provides thermal insulation while also acting as an abrading surface.

Bond coat 62 is a nickel aluminum alloy or may be formed of MCrAl or MCrAlY where the metal M can be nickel (Ni), iron (Fe), or cobalt (Co), or combination thereof, and the alloying elements are chromium (Cr), aluminum (Al), and yttrium (Y). For example, bond coat 62 may be 15-40 wt % Cr, 6-15 wt % Al, and 0.6-1.0 wt % Y.

Ceramic top coat 64 is a dense thermally sprayed coating comprising stabilized zirconia. The zirconia can be stabilized with yttria, gadolinia, ceria, or other stabilizers. Preferably, the zirconia is stabilized with yttria. More preferably, the coating comprises from 11-14 wt % yttria and the balance zirconia. In one embodiment, 12 wt. % yttria is preferred. The microstructure of dense ceramic top coat 64 comprises a layer of splats of yttria stabilized zirconia containing vertical microcracks that extend to the bond coat layer. This microstructure maintains the mechanical integrity of the coating during thermal cycling experienced with engine operation. A dense ceramic top coat using other stabilized zirconias (i.e. Gd or mixtures of Gd & Y) or other ceramics used as thermal barriers producing a similar microcracked structure will also work. The microstructure is controlled by the numerous variables of the coating process.

Bond coat 62 and ceramic top coat 64 of the invention are deposited by plasma spraying. In particular, air plasma spraying may be performed utilizing an F-4 model air plasma spray gun purchased from Plasma Technics Inc., supplied by Sulzer Metco having facilities in Westbury, NY.

Processing parameters of interest include rotor shaft rotation rate, gun angle with respect to substrate surface, gun traverse rate, substrate preheat temperature, powder injection rate, and carrier and plasma gas flow rates. In general, it has been found that a close gun-to-substrate spray distance coupled with relatively high spray gun power results in the desired vertical segmentation or microcracking of the ceramic coating. As will be realized, the parameters may vary with the use of a different spray gun or fixture geometry. Accordingly, the parameters listed here may only be used as a guide for selecting parameters for different operating conditions.

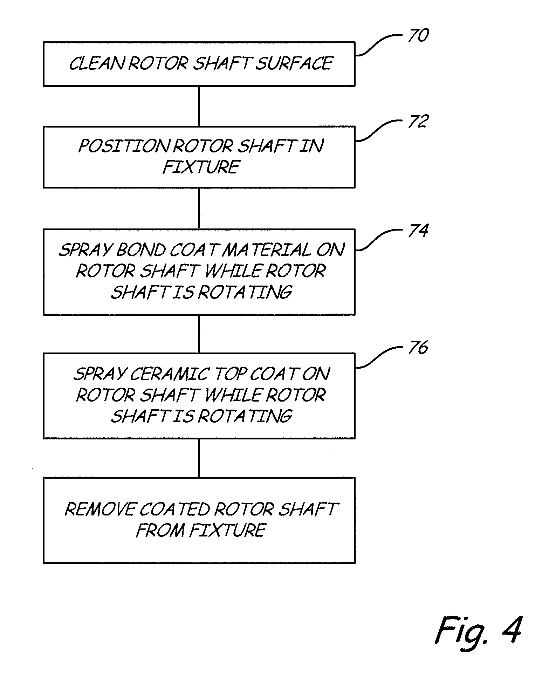

The process for depositing the dense microcracked abrading coating is shown in FIG. 4. The first step in the process is to clean and otherwise prepare the rotor shaft surface. (Step 70). Conventional cleaning and preparation of the rotor surface is by methods known to those versed in the art of plasma spraying. Processes such as mechanical abrasion through vapor or air blast processes using dry or liquid carried abrasive particles impacting the surface are standard.

In the next step, the rotor shaft is positioned in a fixture proximate the nozzle of a plasma spray gun. (Step 72). The fixture allows the rotor shaft to rotate. The spray gun nozzle is similarly fixtured to allow it to traverse the length of the rotor shaft in a direction parallel to the axis of the rotor. Vertical movement of the nozzle is also accommodated.

Bond coat layer 62 is then deposited on rotor 50. (Step 74). This step includes flowing bond coat powder and carrier gases into a high temperature plasma gas stream. In the plasma gas stream, the powder particles melt and are accelerated toward the substrate. Generally, the powder feed rate is adjusted to provide adequate consistency and amount of bond coating. The bond coat powder feed rate ranges from 0.09 to 0.13 pounds per minute (40 to 60 grams per minute). Carrier gas flow (argon gas) is used to maintain the powder under pressure and facilitate powder feed. The carrier gas flow rate ranges from 3 to 9 standard cubic feet per hour (85 to 255 liters per hour).

The gases that make up the plasma gas stream for bond coat deposition are a primary gas (argon gas) and a secondary gas (hydrogen gas). Helium gas may also be used as a secondary gas. The primary gas flow rate in the gun ranges from 85 to 110 standard cubic feet per hour (2407 to 3115 liters per hour) while the secondary gas flow rate ranges from 10 to 20 standard cubic feet per hour (283 to 566 liters per hour). Spray gun power generally ranges from 30 to 50 kilowatts.

Bond coat deposition is carried out with the spray gun nozzle at a distance ranging between about 4 to about 6 inches (10 to 15 centimeters) from the rotor hub surface in a direction substantially perpendicular to the substrate surface while traversing in a direction substantially parallel to the axis of the rotating rotor hub. Spray gun traverse speed during bond coat deposition ranges from 7 to 11 inches per minute (17.8 to 28 centimeters per minute). During bond coat deposition, the cylindrical rotor hub rotates at a speed which ranges from 45 to 100 revolutions per minute. The surface speed of the rotor hub substrate ranges typically from 240 to 320 surface feet per minute (73 to 98 surface meters per minute).

The next step includes forming a layer of ceramic top coat on the bond coat (Step 76). This step includes flowing ceramic top coat powder and carrier gases into the high temperature plasma gas stream. Generally the powder feed rate should be adjusted to provide adequate mix to cover the substrate, yet not be so great as to reduce particle melting and substrate vertical crack formation. Ceramic top coat powder feed rate ranges from 0.045 to 0.061 pounds per minute (20 to 28 grams per minute). Carrier gas flow (argon gas) is used to maintain the powder under pressure and facilitate powder feed. The flow rate ranges from 3 to 7 standard cubic feet per hour (85 to 198 liters per hour).

The step of forming a spray of particles of heated ceramic top coat powder includes the injection of the top coat powder angled such that it imparts a component of velocity to the powder which is opposite to the direction of flow of the plasma toward the rotating fixture. The injection angle is sixty five degrees to eighty five degrees from the primary direction of gas flow back into the flow. Zero degrees defines a flow exactly opposite the gas flow. This increases the residence time of the particles in the plasma gas and allows for better melting of the particles.

Primary gas flow (argon gas) in the gun ranges from 50 to 90 standard cubic feet per hour (1415 to 2547 liters per hour). Similarly, secondary gas flow (hydrogen gas) in the gun ranges from 10 to 30 standard cubic feet per hour (283 to 849 liters per hour). Spray gun power generally ranges from 30-50 kilowatts.

During the application of heated ceramic top coat powder to the rotating substrate (i.e. the rotor), the nozzle is at a distance ranging from 3.25 to 3.75 inches (8.3 to 9.5 centimeters) from the substrate in a direction substantially normal to the substrate surface and is translating in a direction substantially parallel to the axis of the rotor hub. The cylindrical rotor hub rotates at a speed which ranges from 25 to 65 revolutions per minute. Spray gun traverse speed across the substrate during deposition ranges from 3 to 8 inches per minute (5 to 7.6 centimeters per minute). The surface speed of the rotor hub ranges typically from 135 to 160 surface feet per minute (41 to 49 meters per minute). The gun to substrate distance may be varied with the intent of maintaining the appropriate temperature level at the substrate surface. A close gun to substrate distance is necessary for satisfactory vertical microcracking of the abrasive coating. The temperature of application may vary from 300°F to 850°F (149°C to 454°C).

An advantage of the present process is the reproducible and reliable results due to the use of control parameters. This process can be used to repetitively apply bond coating onto substrate surfaces or top coating onto bond coating layers. Another advantage of the present invention is the application of coating to substrates without the use of additional heating apparatus for the substrates. During coating deposition, a sufficient amount of heat required to soften the ceramic and bond coat powders is transmitted to the substrate through the plasma gas and the molten coating powder.

While the invention has been described with reference to an exemplary embodiment(s), it will be understood by those skilled in the art that various changes may be made and equivalents may be substituted for elements thereof without departing from the scope of the invention defined by the claims. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A process of forming a dense, abrading, thermally insulating coating (60) on a rotating member, the process comprising:
rotating the member such that it rotates about an axis;
spraying (74) a bond coat (62) on an outer surface of the member; and
spraying (76) a ceramic top coat (64) on the bond coat.

2. The process of claim 1 wherein the bond coat (62) is a metal bond coat.

3. The process of claim 2 wherein the bond coat (62) is a nickel aluminum alloy, MCrAl or MCrAlY wherein M is Ni, Fe, Co, or alloys thereof.

4. The process of claim 1, 2 or 3 wherein the ceramic top coat (64) is zirconia.

5. The process of claim 4 wherein the zirconia is stabilized with yttria, gadolinia, ceria or mixtures thereof.

6. The process of claim 5 wherein the zirconia is yttria stabilized zirconia which comprises 11-14 wt. % yttria and the balance zirconia.

7. The process of any preceding claim wherein the spraying is plasma spraying.

8. The process of any preceding claim wherein the rotating member is a rotor (50) of a gas turbine engine,
wherein rotating the rotor such that it rotates about an axis is at a first rotation fixed rate;
wherein spraying (74) the bond coat comprises directing a spray of bond coat
particles along the rotating rotor in an axial direction at a second fixed traverse rate; and
wherein spraying (76) the ceramic top coat comprises directing a spray of ceramic
top coat particles along the rotating shaft in an axial direction at a third fixed traverse rate.

9. The process of claim 8 wherein the rotor (50) rotates with a surface velocity of 280 surface feet per minute (85.3 surface meters per minute).

10. The process of claim 8 wherein the bond coat particles are applied at an axial traverse rate from 7 to 11 inches per minute (17.8 to 28 surface centimeters per minute), and/or wherein the ceramic top coat particles are applied at an axial traverse rate from 3 to 8 inches per minute (5 to 7.6 centimeters per minute).

11. The process of any one of claims 8 to 10, wherein the coating is a ceramic coating with vertical microcracks:
wherein spraying (74) the bond coat comprises propelling a spray of heated bond coat particles at the rotating rotor surface which includes flowing bond coat powder and carrier gases into a first plasma gas stream and directing the spray of heated bond coat particles at a distance of from 4 to 6 inches (10 to 15 centimeters) from the rotor surface in a direction substantially perpendicular to the rotor surface while traversing the rotor surface in an axial direction at a rate of 9 inches per minute (22.8 centimeters per minute); and
wherein spraying (76) the ceramic top coat comprises propelling a spray of heated ceramic top coat particles at the rotating bond coated rotor surface which includes flowing ceramic top coat powder and carrier gases into a second plasma gas stream and directing the spray of heated ceramic top coat particles at a distance of from 3.25 to 3.75 inches (8.3 to 9.5 centimeters) from the bond coated rotor surface in a direction substantially perpendicular to the bond coated rotor surface while traversing the bond coated rotor surface at a rate of 6 inches per minute (15.2 centimeters per minute).

12. The process of claim 11 wherein the steps of forming heated particles of at least one of a coating medium includes heating a plasma spray gun to a power of from 30 to 50 kilowatts (30-50KW).

13. The process of claim 11 or 12 wherein the step of forming the heated bond coat medium includes generating a plasma gas stream by heating a primary plasma gas having a gas flow rate of from 85 to 110 standard cubic feet per hour (2407 to 3115 liters per hour) and a secondary plasma gas having a flow rate of between 10 to 20 standard cubic feet per hour (283 to 566 standard cubic liters per hour) and flowing carrier gases carrying bond coat powder having a powder feed rate of from 40 to 60 grams per minute into the plasma gas stream.

14. The process of claim 11, 12 or 13 wherein the steps of forming the heated ceramic top coat medium includes generating a plasma gas stream by heating a primary plasma gas having a gas flow rate of from 50 to 90 standard cubic feet per hour (1415 to 2548 standard liters per hour) and a secondary plasma gas having a gas flow rate of from 10 to 30 standard cubic feet per hour (283 to 850 standard liters per hour) and flowing carrier gases carrying top coat powder having a powder feed rate of from 20 to 28 grams per minute into the plasma gas stream, and wherein the step of forming the heated ceramic top coat medium preferably includes the step of injecting the top coat powder into the plasma gas stream which further includes angling the injection such that it imparts a component of velocity to the powder which is opposite to the direction of flow of the plasma gas stream toward the rotating rotor, the injection angle being 65 degrees to 85 degrees from the primary direction of gas flow back into the flow.

15. The process of claim 14 wherein the ceramic top coat primary plasma gas and carrier gas is argon and secondary plasma gas is hydrogen or helium.
